# EUROPÄISCHE PATENTSCHRIFT

(11) **EP 2 018 803 B1**
(45) Veröffentlichungstag und Bekanntmachung des Hinweises auf die Patenterteilung: **30.05.2018**
(21) Anmeldenummer: 08012022.3
(22) Anmeldetag: 03.07.2008
(51) Int. Cl.: A01D 75/30, A01B 69/00

(54) **Landmaschine**
Agricultural machine
Machine agricole

(30) Priorität: 23.07.2007 DE 102007034166
(43) Veröffentlichungstag der Anmeldung: 28.01.2009
(73) Patentinhaber: PÖTTINGER Landtechnik GmbH, 4710 Grieskirchen (AT)
(72) Erfinder: Baldinger, Markus, Dr. Dipl.-Ing., 4084 St. Agatha (AT); Lehner, Josef, Dipl.-Ing., 4732 St. Thomas (AT); Schremmer, Wolfgang, Ing., 4062 Thening (AT); Baldinger, Martin, Dr. Dipl. Ing., 4722 Peuerbach (AT)
(74) Vertreter: Thoma, Michael

(56) Entgegenhaltungen:
- EP-A- 1 364 573
- EP-A- 1 405 556
- DE-U1- 29 816 837
- FR-A- 2 853 492

## Beschreibung

Die vorliegende Erfindung betrifft eine Landmaschine, insbesondere eine Mähwerkskombination, mit zumindest zwei Arbeitsaggregaten, die in Fahrtrichtung hintereinander angeordnet sind und zueinander spurversetzt benachbarte Fahrgassen überdecken, wobei zumindest eines der beiden Arbeitsaggregate mittels eines Querantriebs quer zur Fahrtrichtung relativ zu dem oder den anderen Arbeitsaggregaten verstellbar ist, sowie mit einer elektronischen Steuervorrichtung zur Steuerung der von den Arbeitsaggregaten überstrichenen Fahrgassen, wobei die Steuervorrichtung eine Bestandskanten-Erfassungseinrichtung zur Erfassung des Verlaufs und/oder der Lage einer Bestandskante sowie eine Lenkwinkelsteuereinheit zur Bereitstellung eines Lenkwinkelsignals in Abhängigkeit des erfassten Verlaufs und/oder der erfassten Lage der Bestandskante aufweist.

Um mit Mähwerken möglichst hohe Flächenleistungen durch große Schnittbreiten zu erzielen, werden häufig Mähwerkskombinationen eingesetzt, die ein frontangebautes Mähwerk sowie heckangebaute, seitlich auskragend angeordnete Mähwerke umfassen. Die einzelnen Mähwerke sind dabei zueinander spurversetzt angeordnet, so dass sie verschiedene Fahrgassen überstreichen, wobei danach getrachtet wird, die einzelnen Mähwerke hinsichtlich ihres Spurversatzes möglichst weit auseinander zu ziehen, so dass die von den Mähwerken überstrichenen Fahrgassen einander möglichst wenig überlappen und für möglichst jedes Mähwerk dessen maximale Arbeitsbreite bestmöglich ausgenutzt wird. Eine zu beachtende Randbedingung ist hierbei jedoch der bei Kurvenfahrten auftretende Spurversatz, der durch den Nachlauf der heckangebauten Mähwerke entsteht. Bei einer Fixierung der Mähwerke dergestalt, dass ihre Fahrgassen bei Geradeausfahrt keine Überlappung aufweisen und im wesentlichen genau aneinander angrenzen, entsteht bei Kurvenfahrten in die eine Richtung ein Fahrgassenstreifen, der von keinem der Mähwerke bearbeitet wird, während bei Kurvenfahrten in die andere Richtung eine zunehmende Überlappung der Fahrgassen auftritt.

Um diesen Effekt bei Kurvenfahrten zu kompensieren, wurde bereits vorgeschlagen, zumindest eines der Mähwerke quer verschieblich aufzuhängen und einen Querantrieb vorzusehen, der bei Kurvenfahrten eine entsprechende Querverschiebung bewirkt. Beispielsweise beschreibt die DE 44 09 113 C1 eine Mähwerkskombination mit einem zentralen, frontangebauten Mähwerk, das von zwei seitlich angebauten Seitenmähwerken flankiert wird. Das frontangebaute Mähwerk kann dabei quer zur Fahrtrichtung verschoben werden, wobei der Verschiebeweg direkt proportional zum Lenkeinschlagwinkel gesteuert wird. Hierdurch kann zwar eine verbesserte Ausnutzung der maximalen Arbeitsbreiten erreicht werden, jedoch besteht bei dieser direkt proportionalen Steuerung der Querverschiebung zum Lenkwinkel weiter Verbesserungsbedarf hinsichtlich der bestmöglichen Ausnutzung der Arbeitsbreiten. In ähnlicher Weise beschreibt die EP 1 321 027 A1 eine Mähwerkskombination mit einem zentralen, frontangebauten Mähwerk sowie zwei seitlich auskragenden heckangebauten Mähwerken, wobei in Abhängigkeit von einer gegebenen Lenkgeometrie die hinteren Mähwerke seitlich verstellt werden können, um unbearbeitete Fahrgassenstreifen zwischen den einzelnen Arbeitsaggregaten zu vermeiden. Eine Landmaschine der eingangs genannten Art ist aus der EP 14 05 556 A2 bekannt, die seitlich verstellbare Mähwerke bei Kurvenfahrten einfährt, um die Überlappung zu Frontmähwerken einzuhalten, wobei die entsprechende Querverschiebung in Abhängigkeit eines mittleren Kurvenradius gesteuert wird, der aus dem Drehwinkelversatz des Differentialgetriebes des Trägerfahrzeugs bestimmt wird.

Derartige Steuerungen, die die Querverschiebung einzelner Arbeitsaggregate fest in Abhängigkeit von Lenkwinkel und Lenkgeometrie steuern, können jedoch die maximale Arbeitsbreite der Arbeitsaggregate regelmäßig nicht vollends ausreizen, da in der Praxis im Lenkverhalten oft abweichende Störgrößen wie ein Radieren der Räder, Querversatz durch Hangfahrten etc. auftreten, die in Form einer zusätzlichen Überlappung sicherheitshalber einkalkuliert werden müssen, um unbearbeitete Fahrgassenstreifen zu vermeiden. Zudem führen bisweilen übermäßig scharfe Lenkbewegungen durch den Maschinenführer zu Fahrbewegungen, die die optimale Ausnutzung der Arbeitsbreiten der Arbeitsaggregate ebenfalls beeinträchtigen.

Hiervon ausgehend liegt der vorliegenden Erfindung die Aufgabe zugrunde, eine verbesserte Landmaschine der genannten Art zu schaffen, die Nachteile des Standes der Technik vermeidet und letzteren in vorteilhafter Weise weiterbildet. Vorzugsweise soll eine Steuerung der Landmaschine geschaffen werden, die eine optimale Ausnutzung der Arbeitsbreiten ihrer Arbeitsaggregate ermöglicht.

Diese Aufgabe wird erfindungsgemäß durch eine Landmaschine mit den Merkmalen gemäß Anspruch 1 gelöst. Bevorzugte Ausgestaltungen der Erfindung sind Gegenstand der abhängigen Ansprüche.

Es wird zur bestmöglichen Ausnutzung der Arbeitsbreiten der Arbeitsaggregate eine Kombination aus Lenkhilfe und automatischer Steuerung der Seiten- bzw. Querverschiebung des zumindest einen quer verschieblichen Arbeitsaggregats vorgeschlagen. Erfindungsgemäß umfasst die Steuervorrichtung eine Bestandskanten-Erfassungseinrichtung zur Erfassung des Verlaufs und/oder der Lage einer Bestandskante des zu bearbeitenden Bodens und/oder des zu bearbeitenden Ernteguts, eine Lenkwinkel-Steuereinheit zur Bereitstellung eines Lenkwinkelsignals in Abhängigkeit des erfassten Verlaufs und/oder der erfassten Lage der Bestandskante, eine Überlappungs-Erfassungseinrichtung zur Erfassung der Überlappung der Fahrgassen der Arbeitsaggregate, welche Überlappungs-Erfassungseinrichtung mittels mindestens eines berührungslos arbeitenden Überlappungssensors die tatsächliche Fahrgassenüberlappung der Arbeitsaggregate misst, sowie eine Überlappungs-Steuereinheit zur Ansteuerung des Querantriebs in Abhängigkeit der gemessenen, tatsächlichen Fahrgassenüberlappung. Durch die erfindungsgemäß vorgeschlagene Kombination einer Lenkhilfe, die in Abhängigkeit der Erfassung der zu bearbeitenden Bestandskante arbeitet und das sogenannte Anschlussfahren beträchtlich verbessert, mit einer automatisierten Steuerung der Seitenverschiebung, kann die in Summe zur Verfügung stehende Arbeitsbreite aller Arbeitsaggregate bestmöglich ausgenutzt werden. Einerseits wird durch die Lenkhilfe der seitlich am weitesten auskragende Rand des jeweiligen Arbeitsaggregats möglichst nahe an der Bestandskante entlanggeführt, so dass hier keine bzw. nur minimale Arbeitsbreite verschenkt wird. Zum anderen sorgt die Steuerung der Seitenverschiebung dafür, dass die Summe der Arbeitsbreiten der einzelnen Arbeitsaggregate stets maximal gehalten wird. Hierbei ist insbesondere von Vorteil, dass die Seitenverschiebung nicht starr in Abhängigkeit eines Lenkwinkels gesteuert wird, sondern die tatsächlich auftretende Überlappung von der Überlappungs-Erfassungseinrichtung erfasst wird, so dass die tatsächlich auftretende Überlappung ungeachtet der eingangs genannten Störgrößen, wie einem je nach Bodenbeschaffenheit variierenden Radieren der Räder in Kurvenfahrt, seitlichem Abschmieren bei Hangfahrten und dergleichen, stets minimal gehalten werden kann, ohne Gefahr zu laufen, dass eine negative Überlappung auftritt dergestalt, dass unbearbeitete Fahrgassenstreifen zwischen den Arbeitsaggregaten bestehen bleiben.

In Weiterbildung der Erfindung können die beiden genannten Steuereinheiten, d.h. die Lenkwinkel-Steuereinheit und die Überlappungs-Steuereinheit, miteinander vernetzt sein bzw. einander gegenseitig berücksichtigen, insbesondere dergestalt, dass die Lenkwinkel-Steuereinheit auch das Signal der Überlappungs-Erfassungseinrichtung und/oder umgekehrt die Überlappungs-Steuereinheit auch das Signal der Bestandskanten-Erfassungseinrichtung berücksichtigt.

Insbesondere kann in Weiterbildung der Erfindung die Überlappungs-Steuereinheit eine mit der Bestandskanten-Erfassungseinrichtung verbundene Vorsteuereinheit zur vorausschauenden Ansteuerung der Querantriebs in Abhängigkeit des erfassten Verlaufs und/oder der erfassten Lage der Bestandskante aufweisen. Die Überlappungssteuereinheit berücksichtigt gemäß dieser Ausbildung der Erfindung also sowohl das Signal, das den Verlauf und/oder die Lage der Bestandskante angibt, als auch das Signal der Überlappungs-Erfassungseinrichtung, das die jeweilige tatsächliche Überlappung der Arbeitsaggregate angibt. Hierdurch kann beispielsweise die Überlappung zwischen den Arbeitsgeräten vorausschauend schon vergrößert werden, wenn ein krummer Verlauf der Bestandskante ein schärferes Einlenken erfordert, das wiederum eine entsprechende Vergrößerung der Überlappung erfordert. Umgekehrt kann vorausschauend die Überlappung auch verkleinert werden, wenn dies die Bestandskante und der deshalb zu erwartende Lenkwinkeleinschlag erlaubt.

Alternativ oder zusätzlich kann die Lenkwinkel-Steuereinheit ebenfalls beide Signale sowohl der Bestandskanten-Erfassungseinrichtung als auch der Überlappungs-Erfassungseinrichtung berücksichtigen, beispielsweise dergestalt, dass ein an sich bereitgestellter Lenkwinkel kleiner gemacht wird, wenn der an sich bestimmte Lenkwinkel eine negative Überlappung der Arbeitsaggregate nach sich ziehen würde. Umgekehrt kann die Lenkwinkelsteuereinheit ggf. auch ein stärkeres Lenkwinkelsignal bereitstellen, das einen stärkeren Lenkwinkel vorgibt, wenn die tatsächliche Überlappung zwischen den Arbeitsaggregaten hierfür notwendige Reserven bietet.

Durch die wechselseitige Berücksichtigung der Signale der Bestandskanten-Erfassungseinrichtung und der Überlappungs-Erfassungseinrichtung kann insgesamt eine bessere Ausnutzung der zur Verfügung stehenden Arbeitsbreite erreicht werden.

In Weiterbildung der Erfindung weist die Überlappungs-Steuereinheit einen Sollwert-Regler auf, der den Querantrieb des zumindest einen quer verschieblichen Arbeitsaggregats derart ansteuert, dass die Überlappung zwischen den Fahrgassen der Arbeitsaggregate auf einen minimalen Überlappungs-Sollwert eingeregelt wird. Alternativ oder zusätzlich weist auch die Lenkwinkelsteuereinheit einen Sollwert-Regler auf, der den Lenkwinkel derart vorgibt, dass der Abstand des seitlich am weitesten ausladenden Fahrgassenrands des jeweiligen Arbeitsaggregats von der Bestandskante auf einen minimalen Abstand geregelt wird bzw. die Überdeckung der Bestandskante durch die Fahrgasse des jeweiligen Arbeitsaggregats auf einen minimalen Überdeckungs-Sollwert eingeregelt wird. Mit anderen Worten wird der Lenkwinkel derart bestimmt, dass das seitlichste Arbeitsaggregat möglichst scharf an der Bestandskante entlanggeführt wird, um eine maximale Arbeitsbreitenausnutzung zu erreichen.

Die genannten Sollwert-Regler der Überlappungs-Steuereinheit bzw. der Lenkwinkelsteuerungseinheit können grundsätzlich verschieden ausgebildet sein. Gemäß einer vorteilhaften Ausführung der Erfindung ist ein selbstlernendes Regelungssystem vorgesehen, bei dem die entsprechenden Regler als adaptive Regler ausgebildet sein können. Alternativ oder zusätzlich können die genannten Sollwert-Regler auch als Fuzzy-Logic-Regler ausgebildet sein, die mit Hilfe von Fuzzy Logic das Lenkwinkelsignal und/oder das Stellsignal für den Querantrieb derart vorgeben, dass eine insgesamt optimale Ausnutzung der Arbeitsbreiten der Arbeitsaggregate erreicht wird. Gemäß einer anderen Ausführung der Erfindung kann zumindest einer der vorgenannten Regler alternativ oder zusätzlich als Pl-Regler ausgebildet sein.

Die Überlappungs-Erfassungseinrichtung kann grundsätzlich verschieden ausgebildet sein. Erfindungsgemäß umfasst sie einen berührungslos arbeitenden Sensor, der die tatsächlich auftretende Fahrgassen-Überlappung zwischen den Arbeitsaggregaten misst. Beispielsweise kann ein optisch arbeitender Sensor Verwendung finden.

Die Bestandskanten-Erfassungseinrichtung kann ebenfalls grundsätzlich verschieden ausgebildet sein. In Weiterbildung der Erfindung umfasst sie einen ebenfalls berührungslos arbeitenden Sensor, der vorteilhafterweise als Akustiksensor ausgebildet sein kann, der nach einer möglichen Ausführungsform im hörbaren Frequenzspektrum arbeitet und die zu erfassende Bestandskante mit akustischen Signalen in einem Frequenzbereich von 20 Hz bis 20 kHz abtastet. Eine Bodenabtastung mit Schallwellen im für das menschliche Ohr hörbaren Frequenzspektrum erweist sich als besonders vorteilhaft, da mit diesem Frequenzbereich, ggf. je nach Anwendung bevorzugte Ausschnitte hieraus, unterschiedliche Bestandskanten gleichermaßen präzise erfasst werden können.

Insbesondere zur präzisen Erfassung von Erntegutschnittkanten kann der zumindest eine Abtastsensor und/oder auch ein weiterer Abtastsensor in einem oberen Frequenzbereich des hörbaren Spektrums arbeiten, um Signalreflexionen von dem noch ungeschnittenen Erntegut zu erhalten. Dabei wird vorteilhafterweise die Erntegutschnittkante mit akustischen Signalen im Bereich von 10 kHz bis 20 kHz abgetastet. Vorzugsweise sendet der Abtastsensor dabei das Abtastsignal seitlich, schräg und/oder von oben auf die Schnittkante. Anhand der Laufzeit und des Signals kann die Schnittkante detektiert werden.

Vorteilhafterweise wird dabei mit einem breitbandigen Abtastsignal gearbeitet. Durch solche breitbandigen Sendesignale wird die Abtastung sozusagen immun gegen Umgebungsgeräusche. Um hier eine günstige Signalauswertung zu ermöglichen, wird in Weiterbildung der Erfindung mit einer Bandbreite von wenigstens 5 kHz, vorzugsweise etwa 10 kHz, gearbeitet.

Nach einer bevorzugten Ausführungsform der Erfindung arbeitet der zumindest eine Abtastsensor mit einem Abtastsignalpuls aus der Gauss'schen Pulsfamilie, wobei nach einer vorteilhaften Ausführung der Erfindung mit einem Abtastsignalpuls der Gauss'schen Pulsfamilie zweiter Ordnung gearbeitet werden kann. Die Pulsdauer kann dabei grundsätzlich unterschiedlich gewählt werden, wobei vorzugsweise eine Pulsdauer von weniger als 10 ms gewählt wird. Nach einer bevorzugten Ausführung der Erfindung arbeitet der zumindest eine Abtastsensor mit einem Gauss'schen Signalpuls mit einer Dauer im Bereich von 0,5 bis 5 ms, insbesondere etwa 1 ms.

Alternativ oder zusätzlich kann der Abtastsensor auch in einem Chirpmodus betrieben werden und die zu erfassende Bestandkante mit Chirpsignalen abtasten. Mit solchen Chirpsignalen können Reflexionen je nach Frequenz bereits an der Erntegutschnittkantenoberfläche erreicht werden, so dass eine präzise Aussage über den Verlauf der Schnittkante getroffen werden kann. Nach einer bevorzugten Ausführung der Erfindung wird dabei mit Chirpsignalen von 10 kHz bis 20 kHz gearbeitet.

Die Periodendauer der Abtastsignale kann grundsätzlich verschieden gewählt werden. In vorteilhafter Weiterbildung der Erfindung liegt die Periodendauer unter einer Sekunde, vorzugsweise im Bereich von 50 ms bis 250 ms. Nach einer bevorzugten Ausführung der Erfindung wird mit einer Periodendauer von etwa 100 ms gearbeitet.

Grundsätzlich kann die Bodenerfassungseinrichtung mehrere Abtastsensoren aufweisen, die in verschiedenen Frequenzbereichen des hörbaren Spektrums arbeiten können. Um jedoch eine einfach bauende, kostengünstige Ausführung zu erreichen, kann in Weiterbildung der Erfindung vorgesehen sein, dass der zumindest eine Abtastsensor abwechselnd in zwei verschiedenen Betriebsarten betrieben werden kann. Insbesondere kann der Abtastsensor mit verschiedenen Signalformen, beispielsweise einmal mit Signalpulsen der Gauss'schen Pulsfamilie und einmal mit Chirpsignalen, betrieben werden. Alternativ oder zusätzlich kann vorgesehen sein, dass der Abtastsensor in verschiedenen Frequenzbereichen betreibbar ist, beispielsweise um eine Anpassung an verschiedene abzutastende Bestandskanten zu ermöglichen. Beispielsweise kann der Abtastsensor zur Abtastung einer Bodenfurche in einem anderen Frequenzbereich betrieben werden als zur Abtastung einer Grasschnittkante. Durch den Betrieb des Abtastsensors in verschiedenen Betriebsmodi kann ein und derselbe Sensor an verschiedene Abtastaufgaben angepasst werden.

Insbesondere kann gemäß einer bevorzugten Ausführung der Erfindung als Abtastsensor ein Ultraschallsensor vorgesehen sein.

In Weiterbildung der Erfindung kann der Automatisierungsgrad der Lenkhilfe unterschiedlich hoch ausgebildet sein. In einer sozusagen Basisversion kann das generierte Lenksignal in eine Anzeigevorrichtung gespeist werden, beispielsweise in Form eines Bildschirms, der den erfassten Bestandskantenverlauf bzw. die erfasste Bestandskantenlage anzeigt, wobei alternativ oder zusätzlich das Lenksignal visualisiert werden kann, beispielsweise in Form eines Pfeils, der in einfacher Form lediglich die Richtung des Lenkradeinschlages vorgibt, darüber hinaus aber auch den Betrag bzw. die Größe des Lenkradeinschlages angeben kann, beispielsweise durch eine verschiedene Größe und/oder verschiedene Farbe des jeweils angezeigten Symbols. Beispielsweise kann ein größerer vorzunehmender Lenkradeinschlag durch einen längeren Pfeil in kräftiger roter Farbe angezeigt werden, während ein kleinerer Lenkradeinschlag durch einen kürzeren Pfeil in blasserer Farbe angezeigt wird.

Insbesondere jedoch kann die Lenkwinkel-Steuereinheit auch aktiv in die Steuerung des Systems der Landmaschine eingreifen. In bevorzugter Weiterbildung der Erfindung kann die Lenkwinkelsteuereinheit eine Lenkeinrichtung zur automatischen oder ggf. halbautomatischen Lenkung der Landmaschine in Abhängigkeit des generierten Lenksignals aufweisen, wodurch ein selbsttätiger Lenkradeinschlag der Landmaschine erreicht wird. Gegebenenfalls kann die Steuerung dabei halbautomatisch ausgebildet sein dahingehend, dass der Maschinenführer sozusagen als übergeordnete Steuerungsinstanz jederzeit in die Lenkung eingreifen kann, um beispielsweise Hindernissen auszuweichen.

Die Erfindung wird nachfolgend anhand bevorzugter Ausführungsbeispiele und zugehöriger Zeichnungen näher erläutert. In den Zeichnungen zeigen:
- Fig. 1:: eine schematische Draufsicht auf eine Mähmaschine in Form einer Mähwerkskombination mit drei Mähwerken, die ein frontangebautes Mähwerk sowie zwei heckangebaute, seitlich auskragende Mähwerke umfassen, und
- Fig. 2:: eine schematische Draufsicht auf eine Mähmaschine gemäß einer weiteren Ausführung der Erfindung in Form einer Mähwerkskombination, die ein frontangebautes Mähwerk sowie vier heckangebaute, zueinander gestaffelt versetzt angeordnete Mähwerke umfasst.

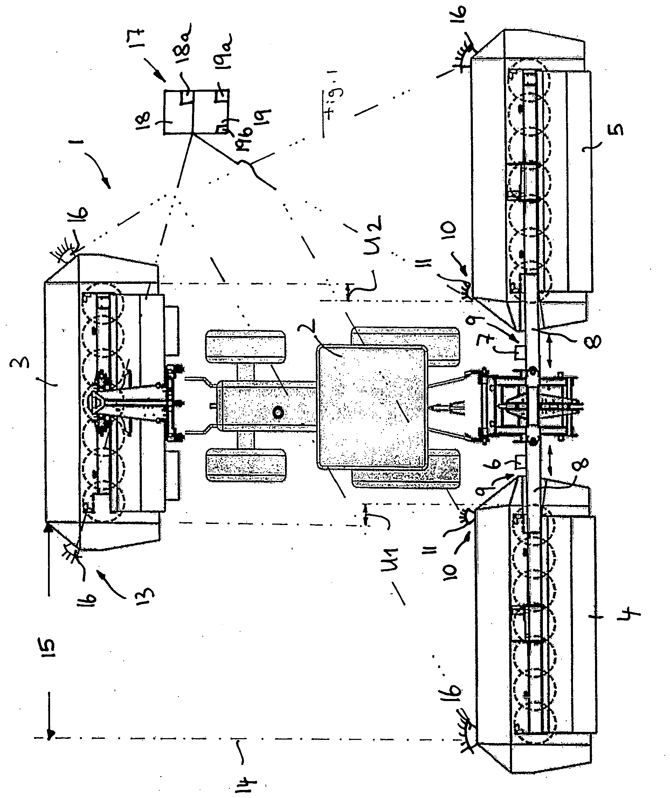

Die in Figur 1 gezeigte Mähmaschine 1 ist an einen Schlepper 2 anbaubar und umfasst ein frontangebautes Mähwerk 3 sowie zwei heckangebaute Mähwerke 4 und 5, die in Fahrtrichtung betrachtet hinter dem frontangebauten Mähwerk 3 angeordnet sind und gegenüber der Fahrgasse des frontangebauten Mähwerks 3 nach rechts und links seitlich versetzt angeordnet sind.

Wie Figur 1 zeigt, sind die beiden seitlich auskragenden Mähwerke 4 und 5 hinsichtlich ihrer Spur derart angeordnet, dass sich ihre Arbeitsbreite bzw. ihre Fahrgasse mit der Arbeitsbreite bzw. der Fahrgasse des frontangebauten Mähwerks 3 geringfügig um die Beträge U1 und U2 überlappen, so dass sichergestellt ist, dass zwischen den Mähwerken 3, 4 und 5 keine unbearbeiteten Fahrgassenstreifen bleiben.

Die heckangebauten Mähwerke 4 und 5 sind dabei jeweils mittels eines Querantriebs 6 und 7 quer zur Fahrtrichtung verschiebbar, so dass ihre Lage bezüglich der Spur des frontangebauten Mähwerks 3 veränderbar ist. Beispielsweise können die Mähwerke 4 und 5 an teleskopierbaren Trägern 8 aufgehängt sein, die mittels Hydraulikzylindern 9 verlängerbar bzw. verkürzbar sind.

Mittels einer Überlappungs-Erfassungseinrichtung 10 wird dabei die Überlappung U1 und U2 der Fahrgassen überwacht. Hierzu sind Überlappungssensoren 11 und 12 vorgesehen, die die Überlappung der nachlaufenden Mähwerke 4 und 5 mit der Fahrgasse des vorauseilenden Mähwerks 3 messen. Gemäß der gezeichneten Ausführung sind diese Überlappungssensoren 11 und 12 vorteilhafterweise an den nachlaufenden Mähwerken 4 und 5 vorgesehen, sie können grundsätzlich jedoch auch an dem frontangebauten Mähwerk 3 oder dem Schlepper 2 vorgesehen sein. Beispielsweise können die genannten Sensoren 11 und 12 optische Sensoren sein.

Weiterhin ist eine Bestandskanten-Erfassungseinrichtung 13 vorgesehen, die die Lage und/oder den Verlauf der Bestandskante 14 relativ zu der Mähmaschine 1 erfasst. Die Bestandskantenerfassungseinrichtung 13 kann hierbei den Abstand der genannten Bestandskante 14 von einem der Mähwerke 3, 4 und 5 und/oder die in Figur 1 mit 15 bezeichnete Mähbreite des von dem vorauseilenden Mähwerk 3 übrig gelassenen Bearbeitungsstreifens messen. Vorteilhafterweise umfasst die genannte Bestandskantenerfassungseinrichtung 13 zumindest einen Bestandskantensensor 16, der an dem vorauseilenden Mähwerk 3 angeordnet sein kann und schräg nach vorne die Bestandskante 14 erfasst. Alternativ oder zusätzlich kann der genannte Bestandskantensensor 16 auch an dem nachlaufenden Mähwerk 4 bzw. 5 angeordnet sein, wobei in der Ausführung gemäß Figur 1 sowohl an dem vorauseilenden Mähwerk 3 als auch an den nachlaufenden Mähwerken 4 und 5 derartige Bestandskantensensoren 16 vorgesehen sind, um eine verbesserte Erfassung der Bestandskante 14 zu erreichen. Vorteilhafterweise sind dabei derartige Bestandskantensensoren 16 sowohl auf der rechten als auch auf der linken Seite vorgesehen, um in beide Richtungen Bestandskanten erfassen zu können.

Die Sensoren 11, 12 und 16 der Überlappungserfassungseinrichtung 10 bzw. der Bestandskantenerfassungseinrichtung 13 sind mit einer Steuervorrichtung 17 verbunden, die an der Mähmaschine 1 selbst und/oder an dem Schlepper 2 vorgesehen sein kann. Die Signale der genannten Sensoren 11, 12 und 16 werden dabei einerseits von einer Lenkwinkel-Steuereinheit 18 und andererseits von einer Überlappungssteuereinheit 19 verarbeitet, die einerseits ein Lenkwinkelsignal zur Lenkung des Schleppers 2 und andererseits ein Signal für die Querantriebe 6 und 7 der quer verschiebbaren Mähwerke 4 und 5 generieren. Die genannten Steuereinheiten 18 und 19 umfassen hierbei jeweils Sollwert-Regler, die in Abhängigkeit der erfassten Signale einerseits den Lenkwinkel und andererseits die Querverschiebung der Querantriebe 6 und 7 derart bestimmen, dass die seitliche Kante des seitlich am weitesten zu dem der Bestandskante 14 hin auskragenden Mähwerk 4 in minimalem Abstand zur genannten Bestandskante 14 geführt wird und andererseits die Überlappung der von den Mähwerken 3, 4 und 5 überstrichenen Fahrgassen U1 und U2 minimal wird.

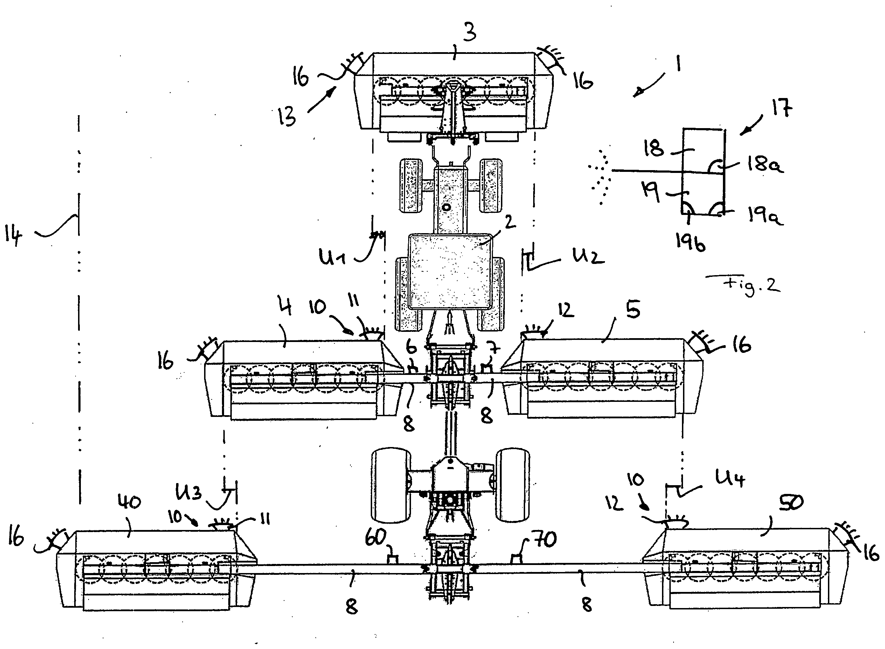

Eine grundsätzlich ähnliche Anordnung einer Mähmaschine 1 zeigt Figur 2. Zusätzlich zu der Ausführung der Figur 1 sind hierbei zwei weitere heckangebaute Mähwerke 40 und 50 vorgesehen, die zu den vorauslaufenden Mähwerken 4 und 5 noch weiter nach außen spurversetzt sind, wobei auch hier wiederum zwischen den vorauseilenden Mähwerken 4 und 5 einerseits und den nachlaufenden Mähwerken 40 und 50 andererseits eine Fahrgassenüberlappung U3 und U4 vorgesehen ist. Die nachlaufenden Mähwerke 40 und 50 können über Querantriebe 60 und 70 ebenfalls querverstellt werden.

Die Überlappungserfassungseinrichtung 10 umfasst hierbei weitere Überlappungssensoren 16, die die Überlappung U3 und U4 zwischen den verschiedenen heckangebauten Mähwerken erfassen. Weiterhin umfasst die Bestandskantenerfassungseinrichtung 13 weitere Bestandskantensensoren 16 an den zusätzlichen Mähwerken 40 und 50, vgl. Figur 2. Die Steuervorrichtung 17 regelt dabei in der vorgenannten Weise nicht nur den Lenkwinkel des Schleppers 2 und die seitliche Querverstellung der Mähwerke 4 und 5, sondern überdies auch noch die Querverstellung der zusätzlichen seitlichen Mähwerke 40 und 50.

## Patentansprüche

1. Landmaschine, insbesondere Mähwerkskombination, mit zumindest zwei Arbeitsaggregaten (3, 4, 5, 40, 50), die in Fahrtrichtung hintereinander angeordnet sind und zueinander spurversetzt benachbarte Fahrgassen überdecken, wobei zumindest eines der Arbeitsaggregate mittels eines Querantriebs (6, 7, 60, 70) quer zur Fahrtrichtung relativ zu dem oder den anderen Arbeitsaggregaten verstellbar ist, sowie mit einer elektronischen Steuervorrichtung (17) zur Steuerung der von den Arbeitsaggregaten (3, 4, 5, 40, 50) überstrichenen Fahrgassen, wobei die Steuervorrichtung (17) eine Bestandskanten-Erfassungseinrichtung (13) zur Erfassung des Verlaufs und/oder der Lage einer Bestandskante (14) und eine Lenkwinkel-Steuereinheit (18) zur Bereitstellung eines Lenkwinkelsignals in Abhängigkeit des erfassten Verlaufs und/oder der erfassten Lage der Bestandskante (14) aufweist, **dadurch gekennzeichnet, dass** eine Überlappungs-Erfassungseinrichtung (10) zur Erfassung der Überlappung (U1, U2, U3, U4) der Fahrgassen der Arbeitsaggregate mittels mindestens eines berührungslos arbeitenden Überlappungssensors (11, 12) die tatsächliche Fahrgassenüberlappung der Arbeitsaggregate misst und eine Überlappungs-Steuereinheit (19) zur Ansteuerung des Querantriebs (6, 7, 60, 70) in Abhängigkeit der gemessenen, tatsächlichen Fahrgassenüberlappung vorgesehen ist.

2. Landmaschine nach dem vorhergehenden Anspruch, wobei die Überlappungs-Steuereinheit (19) eine mit der Bestandskanten-Erfassungseinrichtung (13) verbundene Vorsteuereinheit (19a) zur vorausschauenden Ansteuerung des Querantriebs (6, 7, 60, 70) in Abhängigkeit des erfassten Verlaufs und/oder der erfassten Lage der Bestandskante (14) aufweist.

3. Landmaschine nach einem der vorhergehenden Ansprüche, wobei die Lenkwinkel-Steuereinheit (18) mit der Überlappungs-Erfassungseinrichtung (10) verbundene Steuermittel (18a) zur Beeinflussung des Lenkwinkelsignals in Abhängigkeit der erfassten Fahrgassenüberlappung (U1, U2, U3, U4) aufweist.

4. Landmaschine nach einem der vorhergehenden Ansprüche, wobei die Überlappungs-Steuereinheit (19) einen Sollwert-Regler (19b) zur Einregelung der Überlappung (U1, U2, U3, U4) auf einen minimalen Überlappungs-Sollwert aufweist.

5. Landmaschine nach einem der vorhergehenden Ansprüche, wobei die Lenkwinkelsteuereinheit (18) einen Sollwert-Regler (18b) zur Einregelung der Überdeckung der Bestandskante (14) durch die Fahrgasse des jeweiligen Arbeitsaggregats (4; 40) auf einen minimalen Überdeckungs-Sollwert aufweist.

6. Landmaschine nach einem der beiden vorhergehenden Ansprüche, wobei der Sollwert-Regler (19b) der Überlappungs-Steuereinheit (19) und/oder der Sollwert-Regler (18b) der Lenkwinkel-Steuereinheit (18) als adaptiver Regler ausgebildet ist.

7. Landmaschine nach einem der vorhergehenden Ansprüche, wobei der Sollwert-Regler (19b) der Überlappungs-Steuereinheit (19) und/oder der Sollwert-Regler (18b) der Lenkwinkel-Steuereinheit (18) als Fuzzy-Logic-Regler ausgebildet ist.

8. Landmaschine nach einem der vorhergehenden Ansprüche, wobei der Sollwert-Regler (19b) der Überlappungs-Steuereinheit (19) und/oder der Sollwert-Regler (18b) der Lenkwinkel-Steuereinheit (18) als PI-Regler ausgebildet ist.

9. Landmaschine nach einem der vorhergehenden Ansprüche, wobei die Überlappungs-Erfassungseinrichtung (10) mindestens einen optischen Überlappungssensor (11, 12) zum Messen der tatsächlichen Fahrgassenüberlappung zwischen zueinander benachbarten Arbeitsaggregaten aufweist.

10. Landmaschine nach einem der vorhergehenden Ansprüche, wobei die Bestandskanten-Erfassungseinrichtung (13) mindestens einen berührungslos arbeitenden Bestandskantensensor (16), vorzugsweise einen akustischen Sensor, insbesondere einen Ultraschallsensor, zur berührungslosen Erfassung der Lage und/oder des Verlaufs der Bestandskante (14) aufweist.

11. Landmaschine nach dem vorhergehenden Anspruch, wobei der Bestandskantensensor (16) als akustischer, im hörbaren Frequenzspektrum arbeitender Abtastsensor, der die Bestandskante (14) in einem Frequenzbereich von 20 Hz bis 20 kHz, vorzugsweise 10 kHz bis 20 kHz, abtastet, ausgebildet ist.

12. Landmaschine nach einem der vorhergehenden Ansprüche, wobei ein nachlaufendes, vorzugsweise heckanbaubares, Arbeitsaggregat (4, 5; 40, 50) durch den Querantrieb (6, 7; 60, 70) querverschiebbar ist.

## Claims

1. An agricultural machine, in particular a mowing unit combination, having at least two working units (3, 4, 5, 40, 50), which are arranged one behind the other in the direction of travel and cover neighboring travel lanes offset to one another in terms of lane, wherein at least one the working units, by means of a transverse drive (6, 7, 60, 70), is adjustable transversally to the direction of travel relative to the other working unit(s), as well as having an electronic control device (17) for the control of the travel lanes passed over by the working units (3, 4, 5, 40, 50), wherein the control device (17) comprises a crop edge detection device (13) for detecting the course and/or the position of a crop edge (14), and a steering angle control unit (18) for providing a steering angle signal depending on the detected course and/or the detected position of the crop edge (14), **characterized in that** an overlap detection unit (10) for the detection of the overlap (U1, U2, U3, U4) of the travel lanes of the working units measures the actual travel lane overlap of the working units by means of at least one contactless-operating overlapping sensor (11, 12), and an overlap control unit (19) for the control of the transverse drive (6, 7, 60, 70) is provided depending on the measured, actual travel lane overlap

2. Agricultural machine according to the preceding claim, wherein the overlap control unit (19) comprises a pilot unit (19a) connected with the crop edge detection device (13) for the proactive control of the transverse drive (6, 7, 60, 70) depending on the detected course and/or the detected position of the crop edge (14).

3. Agricultural machine according to one of the preceding claims, wherein the steering angle control unit (18) comprises control means (18a) connected to the overlap detection device (10) for influencing the steering angle signal depending on the detected lane overlap (U1, U2, U3, U4).

4. Agricultural machine according to one of the preceding claims, wherein the overlap control unit (19) comprises a target value controller (19b) for controlling the overlap (U1, U2, U3, U4) to a minimal target overlap value.

5. Agricultural machine according to one of the preceding claims, wherein the steering angle control unit (18) comprises a target value controller (18b) for controlling the overlap of the crop edge (14) through the travel lane of the respective working unit (4; 40) to a minimal target overlap value.

6. Agricultural machine according to one of the two preceding claims, wherein the target value controller (19b) of the overlap control unit (19) and/or of the target value controller (18b) of the steering angle control unit (18) is formed as an adaptive controller.

7. Agricultural machine according to one of the preceding claims, wherein the target value controller (19b) of the overlap control unit (19) and/or the target value controller (18b) of the steering angle control unit (18) are formed as a fuzzy-logic controller.

8. Agricultural machine according to one of the preceding claims, wherein the target value controller (19b) of the overlap control unit (19), and/or the target value controller (18b) of the steering angle control unit (18) is formed as a proportional integral controller.

9. Agricultural machine according to one of the preceding claims, wherein the overlap detection device (10) comprises at least one optical overlap sensor (11, 12) for measuring the actual travel lane overlap between neighboring working units.

10. Agricultural machine according to one of the preceding claims, wherein the crop edge detection device (13) comprises at least one contactlessly-operating crop edge sensor (16), preferably an acoustic sensor, in particular an ultrasound sensor, for the contactless detection of the position and/or of the course of the crop edge (14).

11. Agricultural machine according to the preceding claim, wherein the crop edge sensor (16) is formed as an acoustic scanning sensor operating in the audible frequency spectrum, which scans the crop edge (14) in a frequency range from 20 Hz to 20 kHz, preferably 10 kHz to 20 kHz.

12. Agricultural machine according to one of the preceding claim, wherein a trailing, preferably rear-mountable, working unit (4, 5; 40, 50) is transversally displaceable by the transverse drive (6, 7; 60, 70).

## Revendications

1. Machine agricole, notamment combinaison de faucheuses, comprenant au moins deux unités de travail (3, 4, 5, 40, 50) qui sont disposées l'une derrière l'autre dans le sens de marche et recouvrent des voies de passage voisines décalées les unes par rapport aux autres, au moins une des unités de travail étant réglable par rapport à l'autre ou aux autres unités de travail transversalement au sens de marche au moyen d'un entraînement transversal (6, 7, 60, 70), comprenant également un dispositif de commande (17) électronique pour la commande des voies de passage balayées par les unités de travail (3, 4, 5, 40, 50), le dispositif de commande (17) présentant un dispositif de détection de bord de coupe (13) destiné à détecter le cours et/ou la position d'un bord de coupe (14), et une unité de commande d'angle de direction (18) destinée à fournir un signal d'angle de direction en fonction du cours détecté et/ou de la position détectée du bord de coupe (14), **caractérisée en ce qu'**un dispositif de détection de chevauchement (10), destiné à détecter le chevauchement (U1, U2, U3, U4) des voies de passage des unités de travail au moyen d'au moins un capteur de chevauchement (11, 12) travaillant sans contact, mesure le chevauchement réel des voies de passage des unités de travail et **en ce qu'**une unité de commande de chevauchement (19) destinée à commander l'entraînement transversal (6, 7, 60, 70) en fonction du chevauchement réel mesuré des voies de passage est prévue.

2. Machine agricole selon la revendication précédente, l'unité de commande de chevauchement (19) présentant une unité de commande préalable (19a) reliée au dispositif de détection de bord de coupe (13), destinée à la commande éventuelle de l'entraînement transversal (6, 7, 60, 70) en fonction du cours détecté et/ou de la position détectée du bord de coupe (14).

3. Machine agricole selon l'une quelconque des revendications précédentes, l'unité de commande d'angle de direction (18) présentant des moyens de commande (18a) reliés au dispositif de détection de chevauchement (10) pour influencer le signal d'angle de direction en fonction du chevauchement détecté des voies de passage (U1, U2, U3, U4).

4. Machine agricole selon l'une quelconque des revendications précédentes, l'unité de commande de chevauchement (19) présentant un régulateur de valeur théorique (19b) destiné à régler le chevauchement (U1, U2, U3, U4) sur une valeur théorique de chevauchement minimale.

5. Machine agricole selon l'une quelconque des revendications précédentes, l'unité de commande d'angle de direction (18) présentant un régulateur de valeur théorique (18b) destiné à régler le recouvrement du bord de coupe (14) par la voie de passage de l'unité de travail (4 ; 40) respective sur une valeur théorique de recouvrement minimale.

6. Machine agricole selon l'une quelconque des deux revendications précédentes, le régulateur de valeur théorique (19b) de l'unité de commande de chevauchement (19) et/ou le régulateur de valeur théorique (18b) de l'unité de commande d'angle de direction (18) étant conçus comme régulateurs adaptatifs.

7. Machine agricole selon l'une quelconque des revendications précédentes, le régulateur de valeur théorique (19b) de l'unité de commande de chevauchement (19) et/ou le régulateur de valeur théorique (18b) de l'unité de commande d'angle de direction (18) étant conçus comme régulateurs par logique floue.

8. Machine agricole selon l'une quelconque des revendications précédentes, le régulateur de valeur théorique (19b) de l'unité de commande de chevauchement (19) et/ou le régulateur de valeur théorique (18b) de l'unité de commande d'angle de direction (18) étant conçus comme régulateurs PI.

9. Machine agricole selon l'une quelconque des revendications précédentes, le dispositif de détection de chevauchement (10) présentant au moins un capteur optique de chevauchement (11, 12) destiné à mesurer le chevauchement réel des voies de passage entre les unités de travail voisines les unes aux autres.

10. Machine agricole selon l'une quelconque des revendications précédentes, le dispositif de détection de bord de coupe (13) présentant au moins un capteur de bord de coupe (16) travaillant sans contact, de préférence un capteur acoustique, notamment un capteur à ultrason, pour la détection sans contact de la position et/ou de l'allure du bord de coupe (14).

11. Machine agricole selon la revendication précédente, le capteur de bord de coupe (16) étant conçu comme capteur à balayage travaillant dans le spectre de fréquence audible, lequel explore le bord de coupe (14) dans une plage de fréquence de 20 Hz à 20 kHz, de préférence de 10 kHz à 20 kHz.

12. Machine agricole selon l'une quelconque des revendications précédentes, une unité de travail arrière (4, 5 ; 40, 50), de préférence pouvant être montée à l'arrière, est déplaçable transversalement par l'entraînement transversal (6, 7 ; 60 ; 70).
